Europäisches Patentamt

European Patent Office

Office européen des brevets

(11) Publication number : **0 518 513 A2**

# EUROPEAN PATENT APPLICATION

(21) Application number : 92304710.4

(22) Date of filing : 26.05.92

(51) Int. Cl.$^5$ : **C04B 30/02, E04B 1/76,**
**// (C04B30/02, 14:06, 14:30,**
**14:46)**

(30) Priority : **31.05.91 GB 9111744**

(43) Date of publication of application :
**16.12.92 Bulletin 92/51**

(84) Designated Contracting States :
**BE DE ES FR IT NL SE**

(71) Applicant : **ZORTECH INTERNATIONAL LIMITED**
**Hadzor Hall Hadzor**
**Droitwich Worcestershire WR9 7DJ (GB)**

(72) Inventor : **Hughes, John Thomas**
**Orleton House, Orleton**
**Stanford Bridge Worcestershire WR9 6SU (GB)**
Inventor : **Smith, Michael Edward**
**62 Kenwood Avenue**
**Worcestershire WR4 9BL (GB)**

(74) Representative : **Jackson, Derek Charles**
**Derek Jackson Associates The Haven Plough Road**
**Tibberton Droitwich Worcestershire WR9 7NQ (GB)**

(54) **Thermal insulation material.**

(57) A thermal insulation material comprises :

55 - 65 (preferably 59) percent by weight aluminium oxide ;

5 - 15 (preferably 6) percent by weight silica ;

25 - 35 (preferably 32) percent by weight titanium dioxide ; and

1 - 5 (preferably 2) percent by weight ceramic fibre.

The aluminium oxide is preferably in the form of a pyrogenic material and may have a BET surface area of about 100 m$^2$/g and an average primary particle size of about 20 nm. The silica is preferably in the form of a pyrogenic material and may have a BET surface area of about 200 m$^2$/g and an average primary particle size of about 12 nm. A panel (1) incorporating such a thermal insulation material may comprise thermal insulation material (101) compacted into a reinforcing honeycomb structure (100) such that a layer of insulating material according to the invention extends from one face of the reinforcing honeycomb structure to about 30 percent of the depth thereof and conventional microporous thermal insulation extends the remainder of the depth of the structure. A fire-resistant panel comprising a plurality of such panels (1) of thermal insulation material secured side-by-side by means of at least one first joint cover (3) extending along a join between two adjoining panels and secured to a first face of each of the panels, and at least one second joint cover (8) extending along the join between the two adjoining panels and secured to a second face, opposite the first face, of each of the panels.

FIG 2

The present invention relates to a thermal insulation material, to a panel incorporating such thermal insulation material and to a fire-resistant panel incorporating a plurality of said panels of thermal insulation material.

There is a demand for the provision of a safe haven or refuge on remote structures such as oil platforms where there is a danger of fire, but no ready means of escape or rescue from the structure. The object of such a refuge is to provide a safe retreat for personnel on the structure in the event of fire until the personnel can be rescued. Such a refuge is thus required to resist intense flames and heat for a period of one hour or more.

Handleable panels of thermal insulation material are known for example from our United Kingdom Patent No. 2 144 675 in which there is described a method of manufacturing a thermally insulating panel wherein the thermal insulation material is compacted into the cells of a reinforcing honeycomb structure. However, we have found that such a panel, using known thermal insulating materials, is unsatisfactory for providing fire protection to a refuge in that it is unable to provide the necessary resistance to heat and flames.

It is therefore an object of the present invention to provide a thermal insulation material that is able to withstand intense heat and flames for a reasonable period. It is another object of the present invention to provide a panel of thermal insulation material that is resistant to intense heat and flames for a reasonable period. It is a further object of the present invention to provide an assembly comprising a plurality of such panels to enable a space to be provided that is protected from intense heat and flames for a reasonable period.

According to one aspect of the present invention there is provided a thermal insulation material which comprises:

55 - 65 percent by weight aluminium oxide;
5 - 15 percent by weight silica;
25 - 35 percent by weight titanium dioxide; and
1 - 5 percent by weight ceramic fibre.

Preferably, the composition of the thermal insulation material is substantially:

59 percent by weight aluminium oxide;
6 percent by weight silica;
33 percent by weight titanium dioxide; and
2 percent by weight ceramic fibre.

The aluminium oxide may be in the form of a pyrogenic material. The aluminium oxide may have a BET surface area of about 100 $m^2/g$ and an average primary particle size of about 20 nm.

The silica may be in the form of a pyrogenic material. The silica may have a BET surface area of about 200 $m^2/g$ and an average primary particle size of about 12 nm.

The titanium dioxide may be in the form of finely ground rutile.

According to another aspect of the present invention, a panel of thermal insulation material comprises thermal insulation material compacted into a reinforcing honeycomb structure in such a way that a layer of material containing a substantial proportion of aluminium oxide as described above extends from one face of the reinforcing honeycomb structure to about 30 percent of the depth thereof and conventional microporous thermal insulation extends the remainder of the depth of the structure.

The conventional microporous thermal insulation material may incorporate a hydrophobic material. Additionally or alternatively, the material containing a substantial proportion of aluminium oxide may be covered on its external surface with a thin layer of conventional microporous thermal insulation material that incorporates a hydrophobic material.

A flexible skin may be adhered to each face of the panel. The skin may be aluminium foil or paper. The adhesive may be a two part epoxy adhesive applied to the skin, or a silicone adhesive.

A facing in the form of a sheet of metal may be adhered to each of the flexible skins. On that face of the panel remote from the thermal insulation material containing a substantial proportion of aluminium oxide, the facing sheet may be adhered over its entire surface area to the flexible skin. On that face of the panel adjacent to the thermal insulation material containing a substantial proportion of aluminium oxide the facing sheet may be adhered by means of stripes of adhesive covering about 50 percent of the surface area of the facing sheet. The adhesive may be a two part epoxy adhesive.

Rivets may be passed through the panel at regular intervals, for example of 250 mm. The rivets may be made of stainless steel or a ceramic material and may have a diameter of substantially 3 mm.

According to a further aspect of the present invention a fire-resistant panel comprising a plurality of panels of thermal insulation material as defined hereinabove secured side-by-side by means of at least one first joint cover extending along a join between two adjoining panels and secured to a first face of each of said panels, and at least one second joint cover extending along said join between said two adjoining panels and secured to a second face, opposite said first face, of each of said panels.

The first and second joint covers may comprise a structural member of top hat section secured to each of said panels and containing thermal insulation material in the recess thereof.

The fire-resistant panel may include at least one transverse member extending across and secured to the first face of said panels of thermal insulation material in a direction substantially perpendicular to said joint covers. The means securing the transverse member to the panels of thermal insulation material is preferably relatively readily fractured. The transverse member may be provided with thermal insulation material internally thereof in regions where it passes over a join between adjoining panels of thermal insulation material. The transverse member may extend between ends of adjacent joint covers, retaining means for the transverse member extending between the adjacent joint covers and over the transverse member.

The fire-resistant panel may include a plurality of insulating angle members extending around the periphery of the panels of thermal insulation material with one part of each angle member lying adjacent to said first face and the other part of each angle member extending adjacent the periphery of the panels in a direction towards the second face. The insulating angle members may each comprise a hollow L-shaped member filled with thermal insulation material. The insulating angle members may be secured to the first face of the panel by way of a longitudinally extending strip of material and may be secured to the second face of the panel by way of a longitudinally extending L-shaped member.

The fire-resistant panel may include an insulating end cap member for closing gaps between adjoining ends of said insulating angle members.

An intumescent material may be disposed between each insulating angle member and the first face of the panels of thermal insulation material.

For a better understanding of the present invention and to show more clearly how it may be carried into effect reference will now be made, by way of example, to the accompanying drawings in which:

Figure 1 is a diagrammatic representation of a panel of thermal insulation material according to the present invention;

Figure 2 is a diagrammatic representation, partly cut away, of one face of a fire resistant panel according to the present invention, the fire resistant panel incorporating a plurality of thermal insulation panels as shown in Figure 1;

Figure 3 is a diagrammatic representation of the other face of the fire resistant panel shown in Figure 2;

Figure 4 is a partial cross-sectional view taken along the line IV-IV shown in Figure 2;

Figure 5 is a partial cross-sectional view taken along the line V-V shown in Figure 2;

Figure 6 is an exploded perspective view of the fire resistant panel shown in Figures 2 to 5;

Figure 7 is a cross-sectional view, to a larger scale, taken along the line VII-VII in Figure 2;

Figure 8 is a cross-sectional view, to a larger scale, taken along the line VIII-VIII in Figure 2; and

Figure 9 is an exploded perspective view showing, in greater detail, the region indicated by the arrow A in Figure 2.

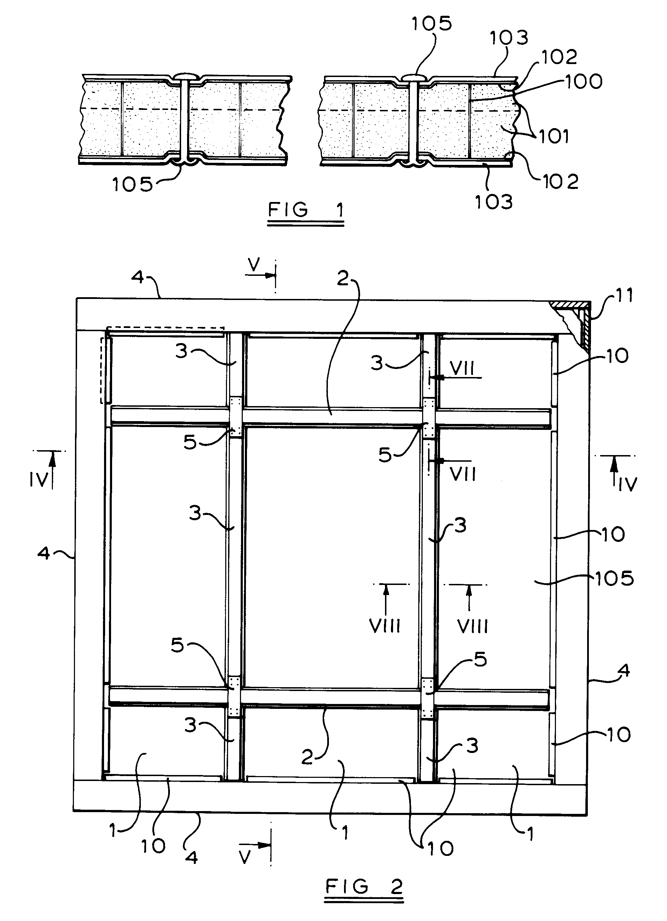

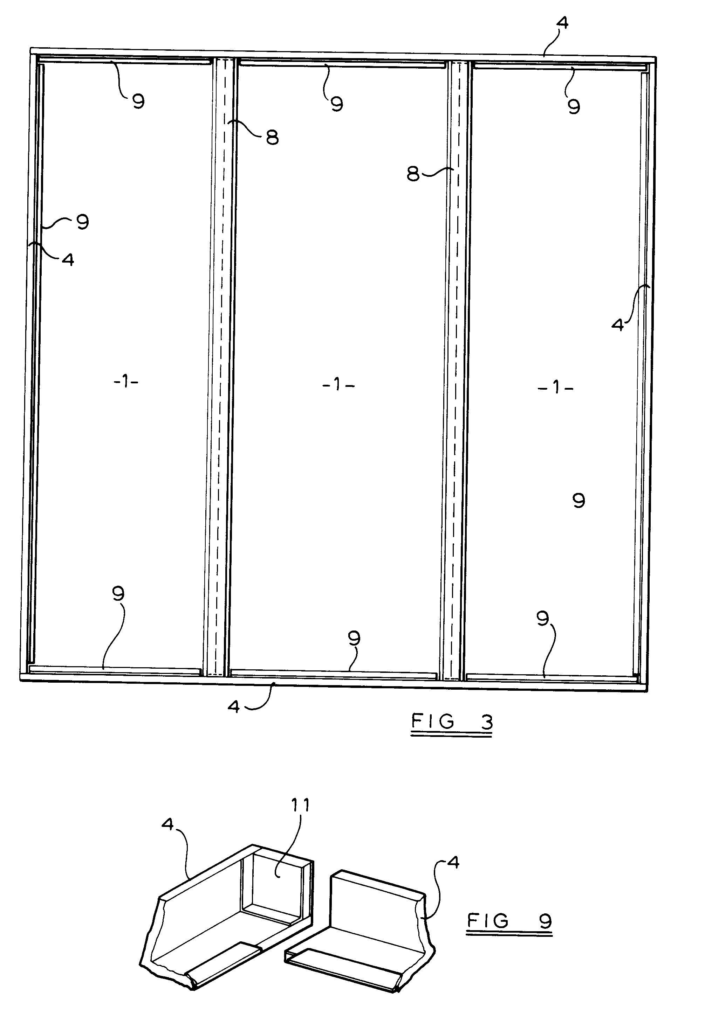

Figures 2 to 9 show a fire resistant panel which comprises three thermally insulating panels 1 shown in more detail in Figure 1. Each panel 1 comprises a reinforcing honeycomb structure 100, for example in the form of a hexagonal cell arrangement made of paper stiffened with a phenolic resin. The cells of the honeycomb structure are preferably constructed with a cell width of 19 to 25 mm between opposing faces. In practice, the thickness of the honeycomb structure will depend on the degree of fire resistance required, but we have found a thickness of 35 mm to be sufficient for most applications. A thermal insulation material 101 is compacted into the honeycomb cells as described in more detail in GB-A-2 144 675.

We have encountered considerable difficulties in ensuring the panel is fire resistant at elevated temperatures because of lateral shrinkage of the thermal insulation material at such temperatures. As mentioned in GB-A-2 144 675, initially residual pressure in the thermal insulation material causes the material to expand and to close any gap created by the disappearance of the honeycomb material. However, we have found that if an elevated temperature above about 1000 °C is maintained for any length of time, the insulation material shrinks laterally and significantly degrades the fire resistant properties of the panel. The use of other known materials, such as those disclosed in GB-A-1 580 909, did not resolve this problem.

Surprisingly, we have found the problem can be overcome by formulating a microporous thermal insulation material that incorporates a substantial percentage of particulate aluminium oxide. The thermal insulation material may comprise:

55 - 65 percent by weight aluminium oxide
5 - 15 percent by weight silica
25 - 35 percent by weight titanium dioxide
1 - 5 percent by weight ceramic fibre

The preferred composition of the thermal insulation material is:

59 percent by weight aluminium oxide
6 percent by weight silica
33 percent by weight titanium dioxide
2 percent by weight ceramic fibre

The aluminium oxide is in the form of a pyrogenic, or fume, material such as that sold under the name Aluminium Oxide C by Degussa AG. This material has a BET surface area of about 100 $m^2/g$ and an average primary particle size of about 20 nm. The silica is also in the form of a pyrogenic, or fume, material such as that sold under the Trade Mark AEROSIL 200 by Degussa AG. This material has a BET surface area of about 200 $m^2/g$ and an average primary particle size of about 12 nm. The titanium dioxide is in the form of finely ground rutile, and the ceramic fibre may comprise any suitable commercially-available material such as that sold under the Trade Mark FIBERFRAX.

The constituents are mixed together in a known manner so as to produce a microporous thermal insulation material having enhanced high-temperature properties.

A microporous thermal insulation material having such a formulation would not normally be considered to have any merit. The aluminium oxide material increases the thermal conductivity of the material and degrades the mechanical strength and compression resistance of the material compared with silica. However, we have found that the aluminium oxide reduces the lateral shrinkage of the thermal insulation material quite markedly at elevated temperatures. For example, we have found that where a mixture in which the microporous material comprises 75 percent silica and 25 percent aluminium oxide might shrink by 15 percent, a mixture with 50 percent silica and 50 percent aluminium oxide will still shrink by about 8 percent, while a mixture with 100 percent aluminium oxide will only shrink by about 1 percent. Nevertheless, we have found that it is desirable to retain a small proportion of silica in order to improve the mechanical and thermal properties of the resulting thermal insulation material.

Thermal insulation material is compacted into the reinforcing honeycomb structure in such a way that a layer of material containing the high proportion of aluminium oxide extends from one face of the reinforcing honeycomb structure to about 30 percent of the depth thereof and conventional microporous thermal insulation extends the remainder of the depth of the structure. Thus the material high in aluminium oxide is able to protect the face of the panel, hereinafter called the hot face, exposed to elevated temperatures, while the conventional material is present at the cold face and improves the overall thermal performance of the panel. The conventional material may incorporate a hydrophobic material in order to improve the long term performance of the panel in environments that may be exposed to water or high humidity since water or condensation can have a detrimental effect on the thermal performance of the material. Additionally, the material high in aluminium oxide may be covered on its external surface with a thin layer of conventional material that incorporates a hydrophobic material in order to ensure the performance of the material is not impaired by the presence of water or condensation.

Once the thermal insulation material has been compacted into the reinforcing honeycomb structure, a flexible skin 102 is adhered to each face of the panel. The skin is preferably aluminium foil in order to minimise the amount of organic material, but paper may be used in some applications although paper tends to absorb the adhesive and gives rise to increased levels of smoke and smell. The adhesive may be a two part epoxy adhesive applied to the skin, but other adhesives such as nonorganic adhesives could be used. One option is to use a silicone adhesive activated by the application of a mist of water.

Adhered to each of the flexible skins 102 is a facing 103 in the form of a sheet of metal. Where exposure to corrosive environments such as sea water is to be expected, the facing sheet is preferably made of stainless steel, but for other environments materials such as zinc coated mild steel may be employed. Mild steel has the advantage of a lower coefficient of thermal expansion. On the cold face of the panel, the facing sheet may be adhered over its entire surface area to the flexible skin 102, for example by means of a two part epoxy adhesive, but on the hot face of the panel the adhesive, which may be a two part epoxy adhesive, is preferably applied as stripes covering about 50 percent of the surface area of the face of the panel in order to reduce smoke and smell emanating from the adhesive. The use of an epoxy adhesive is preferable because there is little oxygen available between the flexible skin and the facing sheet and epoxy adhesives are self-curing and do not require a supply of oxygen in order to harden. Other adhesives having similar properties may also be used.

When the panel is exposed to elevated temperatures at the hot face thereof, the adhesive bond at the hot face between the facing sheet 103 and the flexible skin 102 is destroyed and the facing sheet bulges and can distort. There is a risk that the individual capsules of microporous thermal insulation may fall out of the honeycomb structure, particularly if the adhesive bond at the cold face is also destroyed. In order to minimise the risk of distortion of the panel, and to localise bulging of the facing sheet, rivets 105 are passed through the panel at regular intervals, for example of 250 mm. The rivets are preferably made of stainless steel and have a diameter of 3 mm in order to keep heat conduction to a minimum. Ceramic rivets could also be used, but mild steel rivets have a higher thermal conductivity than stainless steel and are unsatisfactory in some applications.

The nature of the thermal insulation panels 1 is such that it is at present difficult to manufacture panels having an area substantially greater than 3 m². In order to construct a fire resistant panel having greater dimensions than the thermal insulation panel 1, three panels 1 as shown in Figures 2 to 9 are placed side by side and are interconnected on the hot face of the panels by means of two laterally extending lifting members 2 that are spaced from each other, and by means of a plurality of joint covers 3 that extend along the joints between the panels in a direction substantially perpendicular to the lifting members 2. The lifting members 2 are provided with lifting eyes 7 to facilitate lifting the panel into position.

The lifting members 2 and the joint covers 3 are secured to the facing sheet 103 by fastening means such as blind rivets or metal screws. The fastening means for the joint covers may be made of stainless steel, but the fastening means for the lifting members 2 are preferably made of aluminium to allow expansion of the lifting members relative to the panels.

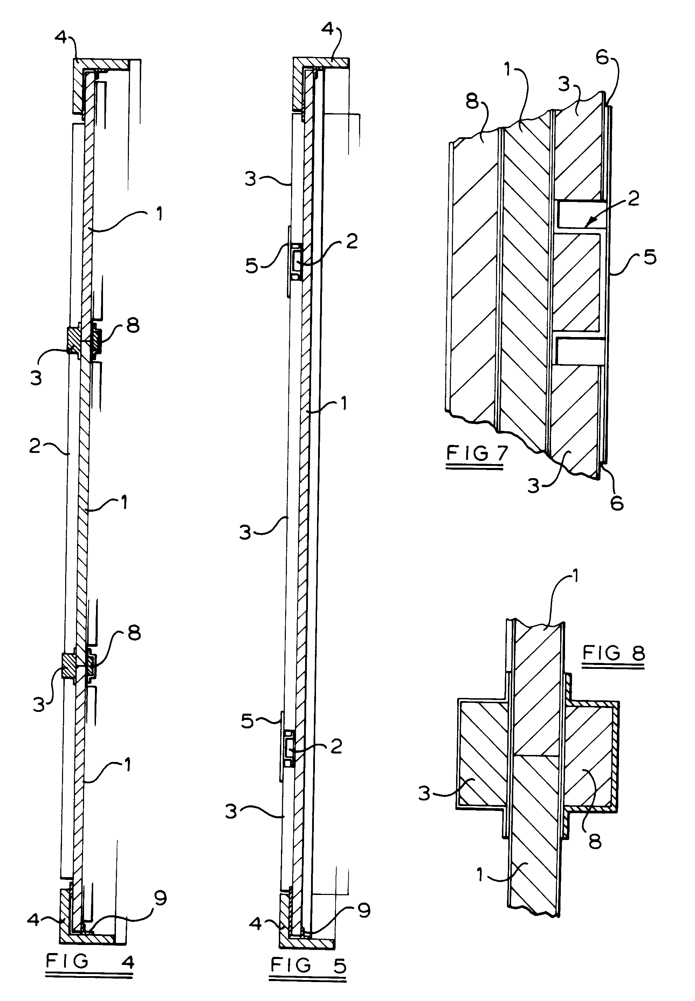

The lifting members 2 and the joint covers 3 may be made from stainless steel having a thickness of, for example, 3 mm for the lifting members and 0.5 mm for the joint covers and formed into a "top hat" channel section as shown in the drawings, the section having a depth of some 35 mm. As an alternative to the section shown, the top of the section may be formed with an elongate recess for added strength. The joint covers 3 are filled with thermal insulation material such as the microporous thermal insulation material described above compacted into a reinforcing honeycomb structure, although more conventional microporous thermal insulation materials may be used as alternatives. Where the joint covers 3 intersect with the lifting members 2, the lifting members may be provided with internal thermal insulation in the same manner as the joint covers. In addition, as shown in more detail in Figure 7, cover plates 5 and packing members 6 extend across the lifting members 2 and are secured to the ends of the adjacent joint covers 3. The cover plates 5 are intended to retain the lifting members 2 in the event that they should expand and sever the aluminium fastening means.

On the cold face of the panel, the panels are interconnected by joint covers 8 which are similar to the joint covers 3. However, the joint covers 8 are intended to provide greater structural support to the panels and are made, for example, from stainless steel having a thickness of some 3 mm. This can be seen, for example, in Figure 8. As with the joint covers 3, the joint covers 8 are filled with microporous thermal insulation material and are secured to the facings of the panels by fastening means such as stainless steel screws or blind rivets.

To provide fire protection for a safe haven or retreat in the event of a fire, it is necessary to secure a number of the fire resistant panels substantially at right angles while avoiding seepage of heat between the panels. This is accomplished by using insulating angle members 4 that extend around the peripheral edges of the fire resistant panel.

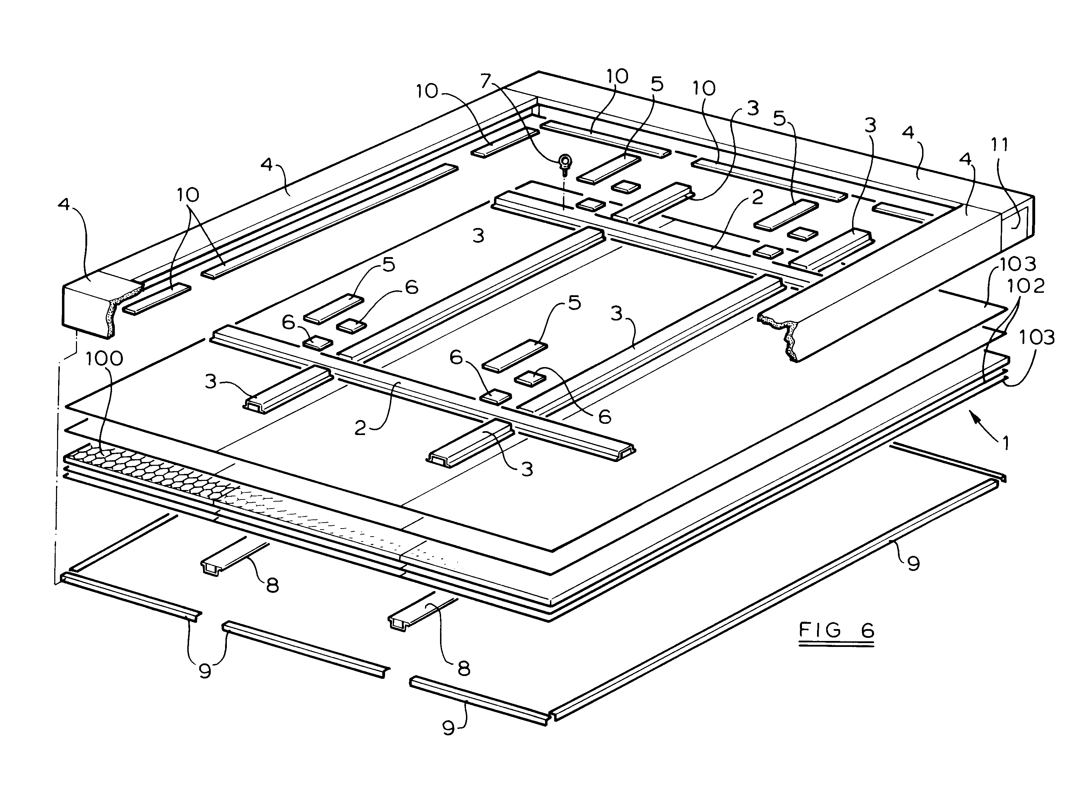

Each angle member 4 is made in the form of a hollow L-shaped section made, for example, from stainless steel having a thickness of 0.5 mm and filled with microporous thermal insulation material such as that described above. The thermal insulation material is completely encased in the L-shaped section, which may be closed for example by screws, rivets or spot welding. The angle members are secured to the fire resistant panel by way of an L-shaped member 9 of stainless steel secured to the cold face of the panel and by way of a strip 10 of stainless steel secured to the hot face of the panel. As can be seen from the figures, two of the angle members 4 extend the entire length of the panel, while the other two angle members extend between the first two members. This leaves a gap between portions of the adjoining angle members 4 which is closed by means of an end cap 11. As can be seen more clearly from Figure 9, each end cap 11 comprises a stainless steel section having a thickness of some 0.5 mm and enclosing microporous thermal insulation material as described above. The end caps 11 are secured in the gaps between adjoining angle members 4.

To assist in sealing between the fire resistant panel, the angle members 4 and end caps 11, an intumescent material such as that sold under the name CHARTEK may be located between the panel, the angle members 4 and the end caps 11 on the hot face of the fire resistant panel.

Although it is not shown in the drawings, the exposed edges of the panels 1 may be closed by means of a channel section element in order to minimise any loss of thermal insulation material.

It will be appreciated that the components of the fire-resistant panel may be supplied in kit form for cutting to size and final assembly on site.

## Claims

1. A thermal insulation material which comprises:
   55 - 65 percent by weight aluminium oxide;
   5 - 15 percent by weight silica;
   25 - 35 percent by weight titanium dioxide; and
   1 - 5 percent by weight ceramic fibre.

2. A thermal insulation material as claimed in claim 1, characterised in that the material comprises substantially:
   59 percent by weight aluminium oxide;
   6 percent by weight silica;
   33 percent by weight titanium dioxide; and
   2 percent by weight ceramic fibre.

3. A thermal insulation material as claimed in claim 1 or 2, characterised in that the aluminium oxide is in the form of a pyrogenic material.

4. A thermal insulation material as claimed in any preceding claim, characterised in that the aluminium oxide has a BET surface area of about 100 $m^2/g$ and an average primary particle size of about 20 nm.

5. A thermal insulation material as claimed in any preceding claim, characterised in that the silica is in the form of a pyrogenic material.

6. A thermal insulation material as claimed in any preceding claim, characterised in that the silica has a BET surface area of about 200 $m^2/g$ and an average primary particle size of about 12 nm.

7. A thermal insulation material as claimed in any preceding claim, characterised in that the titanium dioxide is in the form of finely ground rutile.

8. A panel of thermal insulation material comprising thermal insulation material (101) compacted into a reinforcing honeycomb structure (100) characterised in that a layer of material as claimed in any one of claims 1 to 7 extends from one face of the reinforcing honeycomb structure to about 30 percent of the depth thereof and conventional microporous thermal insulation extends the remainder of the depth of the structure, the conventional microporous thermal insulation material preferably incorporating a hydrophobic material.

9. A panel of thermal insulation material as claimed in claim 8, characterised in that the material as claimed in any one of claims 1 to 7 is covered on its external surface with a thin layer of conventional microporous thermal insulation material that incorporates a hydrophobic material.

10. A panel of thermal insulation material as claimed in claim 8 or 9, characterised in that a flexible skin (102) is adhered to each face of the panel, the skin (102) preferably comprising aluminium foil or paper, and the adhesive preferably comprising a two part epoxy adhesive applied to the skin or a silicone adhesive.

11. A panel of thermal insulation material as claimed in any one of claims 8 to 10, characterised in that a facing (103) in the form of a sheet of metal is adhered, preferably by means of a two-part epoxy adhesive, to each of the flexible skins (102), and in that on that face of the panel remote from the thermal insulation material as claimed in any one of claims 1 to 7, the facing sheet (103) is preferably adhered over its entire surface area to the flexible skin (102), and in that on that face of the panel adjacent to the thermal insulation material as claimed in any one of claims 1 to 7, the facing sheet (103) is preferably adhered by means of stripes of adhesive covering about 50 percent of the surface area of the facing sheet.

12. A panel of thermal insulation material as claimed in any one of claims 8 to 11, characterised in that rivets (105) are passed through the panel at regular intervals, for example of 250 mm, the rivets (105) preferably being made of stainless steel or a ceramic material and preferably having a diameter of substantially 3 mm.

13. A fire-resistant panel comprising a plurality of panels (1) of thermal insulation material as claimed in any one of claims 8 to 12 secured side-by-side by means of at least one first joint cover (3) extending along a join between two adjoining panels and secured to a first face of each of said panels, and at least one second joint cover (8) extending along said join between said two adjoining panels and secured to a second face, opposite said first face, of each of said panels.

14. A fire-resistant panel as claimed in claim 13, characterised in that the first and second joint covers (3, 8) comprise a structural member of top hat section secured to each of said panels and containing thermal insulation material in the recess thereof.

15. A fire-resistant panel as claimed in claim 13 or 14, and including at least one transverse member (2) extending across and secured to the first face of said panels (1) of thermal insulation material in a direction substantially perpendicular to said joint covers (3, 8), the means securing the transverse member (2) to the panels (1) of thermal insulation material preferably being relatively readily fractured, and the transverse member (2) preferably being provided with thermal insulation material internally thereof in regions where it passes over a join between adjoining panels (1) of thermal insulation material.

16. A fire-resistant panel as claimed in claim 15, characterised in that the transverse member (2) extends between ends of adjacent joint covers (3), and in that retaining means (5) for the transverse member extends between the adjacent joint covers and over the transverse member.

17. A fire-resistant panel as claimed in any one of claims 13 to 16 and including a plurality of insulating angle members (4) extending around the periphery of the panels (1) of thermal insulation material with one part of each angle member lying adjacent to said first face and the other part of each angle member extending adjacent the periphery of the panels in a direction towards the second face, the insulating angle members (4) preferably each comprising a hollow L-shaped member filled with thermal insulation material.

18. A fire-resistant panel as claimed in claim 17, characterised in that said insulating angle members (4) are secured to the first face of the panel (1) by way of a longitudinally extending strip (10) of material and are secured to the second face of the panel by way of a longitudinally extending L-shaped member (9).

19. A fire-resistant panel as claimed in claim 17 or 18 and including an insulating end cap member (11) for closing gaps between adjoining ends of said insulating angle members (4).

**20.** A fire-resistant panel as claimed in any one of claims 17 to 19 and including an intumescent material disposed between each insulating angle member (4) and the first face of the panels (1) of thermal insulation material.

FIG 1

FIG 2

FIG 3

FIG 9

FIG 4

FIG 5

FIG 7

FIG 8

FIG 6